# EUROPEAN PATENT APPLICATION

(11) **EP 1 484 871 A1**
(43) Date of publication of application: **08.12.2004**
(21) Application number: 03012613.0
(22) Date of filing: 03.06.2003
(51) Int. Cl.: H04L 12/56, H04Q 7/32, H04L 29/06

(54) **Apparatus, method and software program product for quality of service management in a mobile device**

(71) Applicant: fg microtec GmbH, 81677 München (DE)
(72) Inventor: Kelz, Thomas, Dr., 16767 Germendorf (DE); Mirbaha Vahid, Robert, 85386 Eching (DE)
(74) Representative: Köllner, Malte

(57) **Abstract**

A controller module (19) for coordinating data flow in a mobile device is described. The mobile device comprises at least one application (mail (25), games (26), video (27), Push2Talk (28), JVM, Instant Messaging (IM) and MMS) adapted for exchanging data with at least one protocol stack (2,3); said protocol stacks being adapted for transferring data between at least one of said applications and a wireless connection. The controller module is adapted for receiving information about the respective QoS requirements of at least one of said applications, and at least one of actual parameters and predicted parameters within the mobile device that indicate at least one of an actual state and a future state of said data flow. The controller module is adapted for deriving, from said inputs, control settings for the mobile device in a way that said QoS requirements are fulfilled as far as possible.

## Description

### BACKGROUND OF THE INVENTION

The present invention relates to a controller module for a mobile device, to a mobile device, and to a method for coordinating data flow in a mobile device.

Mobile devices, e.g. handsets or PDAs (Personal Digital Assistants), comprise a plurality of different applications that are supplied by different companies. Some of said applications include their own protocols, while others might e.g. use transport protocols such as UDP/IP or TCP/IP. Data is transferred from said transport protocol layers to the mobile device's transmission protocol stack, e.g. to a GPRS/GSM or a GPRS/EDGE stack, and then, said data is transmitted via a wireless connection. Data that has been received via the wireless connection is transferred from the transmission protocol stack to the respective transport protocol stack.

The transmission protocol stack receives data traffic from different kinds of applications and takes care of said data streams. The specific requirements of the different types of data traffic are not always considered.

### SUMMARY OF THE INVENTION

It is an object of the invention to improve the data flow within a mobile device. The object of the invention is solved by the independent claims. Preferred embodiments are shown by the dependent claims.

According to the present invention, a controller module for coordinating data flow in a mobile device is provided. The mobile device comprises at least one application that is adapted for exchanging data with at least one protocol stack, whereby said protocol stacks are adapted for transferring data between at least one of said applications and a wireless connection. The controller module is adapted for receiving information about the respective quality-of-service (QoS) requirements of at least one of said applications, and at least one of actual parameters and predicted parameters within the mobile device that indicate at least one of an actual state and a future state of said data flow. The controller module is adapted for deriving, from said inputs, control settings for the mobile device in a way that said quality-of service requirements are fulfilled as far as possible.

The controller module according to embodiments of the present invention provides a link between the applications that are implemented on the mobile device and the protocol stacks, whereby said protocol stacks might e.g. comprise transport protocol stacks such as UDP/IP or TCP/IP as well as transmission protocol stacks, e.g. of the GPRS type. The controller module is informed about the needs of the applications, in particular about the quality-of-service requirements of said applications, because the quality-of-service requirements imposed by a Video data stream differ considerably from those of a background application such as e.g. mail. Besides that, the controller module is informed about the state of the data flow in the system. The controller module might e.g. receive parameters indicating the workload of the various protocol stacks, like e.g. the fill levels of buffers. The controller module might e.g. also be informed about the signal strength and the available bandwidth of the wireless connection. Alternatively or additionally, the controller module might receive predicted data indicating a future state of the system's data flow. Said predicted data might e.g. comprise information related to the timing of cell reselections.

Based on this input data, the controller module can calculate optimum setting parameters for the system. Said setting parameters might e.g. comprise setting parameters for the transport protocol stacks, for the transmission protocol stack, for the applications, for the radio resource management, etc. The controller module might e.g. select a transmission mode that is best suited for the respective traffic, it might prioritise the different data streams, postpone cell reselections, etc. The decisions of the controller module might be based on predefined rules, or on statistics, or on the validated results of a trial-and-error strategy, just to name a few examples. The controller module sets the system's arbitrary parameters in a way that the respective quality-of-service requirements of the different kinds of data traffic are fulfilled as far as possible.

The interplay between the applications, the various protocol stacks supplied by different companies and the wireless link is improved. As a result, the available resources in terms of bandwidth and transmission capacities can be exploited more efficiently. The total throughput might increase, and the properties of a respective data transmission will be better adapted to the requirements imposed by the type of the data stream that is transmitted. A smooth and efficient transmission is provided for all sorts of data traffic.

Preferably, said controller module receives said actual parameters from at least one of: the applications, the protocol stacks, the wireless connection. According to a preferred embodiment of the invention, said actual parameters comprise at least one of: workload of at least one of the protocol stacks, fill level of buffers, available bandwidth, signal strength on the wireless link. Further preferably, said control settings comprise control settings for at least one of: the protocol stacks, the applications and the wireless connection. The settings within the whole mobile device may be dynamically adapted to one another, and to the respective needs of the applications.

According to another preferred embodiment of the invention, said controller module is adapted for at least one of validating whether the derived control settings have been well-suited for fulfilling said quality-of-service requirements and whether the predicted parameters have been correct. The controller module might e.g. evaluate whether the previous control settings have improved the data flow within the mobile device. Besides that, the controller module might e.g. draw up statistics in order to continuously improve the strategies for generating said control settings.

A mobile device according to the invention comprises at least one application adapted for exchanging data with at least one protocol stack, and at least one protocol stack adapted for transferring data between at least one of said applications and a wireless connection. Furthermore, the mobile device comprises a controller module adapted for coordinating data flow in the mobile device. Said controller module is adapted for receiving information about the respective quality-of-service requirements of at least one of said applications, and at least one of actual parameters and predicted parameters within the mobile device that indicate at least one of an actual state and a future state of said data flow. The controller module is adapted for deriving, from said inputs, control settings for the mobile device in a way that said quality-of-service requirements are fulfilled substantially in the best possible way.

Preferably, said protocol stacks comprise at least one transport protocol stack adapted for transferring data between at least one of said applications and a transmission control stack, and the transmission protocol stack, which is adapted for transferring data between at least one of said transport protocol stacks and the wireless connection. Usually, the various protocol stacks within the system are developed according to different standards that have been specified by different standard bodies. Furthermore, the transport protocol stacks (like e.g. UDP/IP or TCP/IP) and the transmission protocol stack (as e.g. a GPRS stack) are often supplied by different companies. Therefore, these protocol stacks are not very well adjusted to each other. To some extent, it is possible to adapt the respective protocol stacks to the needs of the user, though. The protocol stacks might comprise arbitrary parameters that can be defined by the user. By adjusting these settings, it is possible to improve the interaction between the transport protocol stacks and the transmission protocol stack, whereby the interactions induced by the controller module are not limited by the commonly used layered approach. The control exerted by the controller module might cover layers from the applications down to the physical layer.

Preferably, the transport protocols comprise at least one of the protocols WAP, TCP, WTCP, UDP, UDP lite, RTP/RTCP. According to a preferred embodiment of the invention, said transmission protocol stack is a stack for at least one of: GPRS/GSM, GPRS/EDGE, CDMA, UMTS, wireless LAN, Bluetooth. Further preferably, the transmission protocol stack comprises at least one of a SNDCP, LLC, RLC, MAC, L1 layer.

Preferably, the mobile device comprises a collector module adapted for collecting at least one of said actual parameters within the mobile device that indicate the actual state of the data flow. This module is responsible for gathering parameters from all parts of the mobile device, e.g. from the protocol stacks, from the mobility/radio resource management, from the applications, etc. In case any system components are modified, the collector module will have to be adapted as well, but all the other modules of the quality-of-service management system (e.g. the controller module) don't have to be modified, because they receive data from the collector module.

Further preferably, the mobile device comprises a state predictor module adapted for deriving, from at least one of said actual parameters, predicted parameters within the mobile device that indicate a future state of the data flow. This provides an opportunity to look ahead and anticipate the future behaviour of the system. The data flow can be smoothly adapted to the future properties. In particular, it is useful to know in advance that a cell reselection will occur.

Preferably, said state predictor module provides predictions for at least one of round trip time, throughput, coding scheme, bit error rate, and cell reselections. For different kinds of data traffic, different kinds of predictions might be used. For example, for an application such as Video, predictions related to throughput might be considered more important than predictions that relate to the bit error rate, because for this kind of traffic, the bit error rate might not be considered as being important. The controller module might therefore consider the predictions in accordance with the respective type of data traffic.

According to a preferred embodiment of the invention, the mobile device comprises at least one protocol optimiser module adapted for accessing the parameters of corresponding transport protocol stacks, preferably in accordance with control settings provided by the controller module. The transport protocol stacks might offer a possibility for adapting their configurations to the quality-of-service requirements of applications that use the respective transport protocol. The corresponding protocol optimiser module will then optimise the configuration of the transport protocol stack. There might exist arbitrary parameters of the transport protocol stack that may be modified by the protocol optimisers in accordance with the respective needs. By doing this, it is possible to optimise overall data flow and throughput.

According to another preferred embodiment of the invention, the mobile device comprises a stack manager module adapted for accessing the settings of the transmission protocol stack, preferably in accordance with control settings provided by the controller module. Transmission protocol stacks provide a variety of features that can be adapted dynamically to the requirements of the kind of data stream that is actually transmitted, in particular to the requirements related to reliability, priority, delay and required bandwidth of the data traffic. For example, the transmission protocol stack might e.g. provide different options concerning the transmission mode. For a real-time application, an unacknowledged mode might be more suitable than an acknowledged mode. Besides that, the transmission protocol stack might e.g. comprise buffers that can be used for optimising the data flow. Though a transmission protocol stack of the GPRS type is used in most mobile devices today, the present application also relates to future transmission protocol stacks. Future transmission protocol stacks will most likely also comprise possibilities for adjusting the transmission properties to the quality-of-service requirements.

Preferably, said stack manager module is adapted for at least one of: modifying the timing of a cell reselection, interacting with the RLC layer of the transmission protocol stack, indicating to the transmission protocol stack that a certain quality-of-service class is required, managing PDP contexts of the transmission protocol stack in accordance with quality-of-service requirements, setting or modifying GGSN filter rules.

According to a preferred embodiment of the invention, the mobile device might comprise a quality-of-service packet processor module adapted for at least one of monitoring and modifying the data flow between said at least one transport protocol stack and the transmission protocol stack. The quality-of-service packet processor module keeps track of the different kinds of data traffic that are forwarded to the transmission protocol stack. The information obtained by monitoring the data traffic might be used for drawing up statistics, and said statistics might be helpful for determining future system settings. Besides that, the quality-of-service packet processor module might be used for actively controlling and modifying the data flow. Instead of passing all the data packets to the transmission protocol stack, the quality-of-service packet processor module might delete or buffer some of the data packets. Additionally, the quality-of-service packet processor module might e.g. fragment arriving data packets.

Preferably, said quality-of-service packet processor module is adapted for buffering data packets in order to optimise the data flow. For example, it might be advantageous to buffer data packets of a background application during the transmission of a real-time data stream. Thus, the requirements of different kinds of data traffic, and in particular the requirements of real-time traffic can be fulfilled while data packets of other applications do not necessarily get lost.

According to another preferred embodiment of the invention, the mobile device comprises a RLC manager module adapted for accessing the RLC layer. Usually, the RLC layer of a GPRS transmission stack comprises a RLC buffer adapted for buffering data packets. The fill level of said RLC buffer is an important parameter that can be used for optimising data traffic within the transmission protocol stack.

Preferably, said RLC manager module establishes a feedback channel to the quality-of-service packet processor module in order to provide the quality-of-service packet processor module with information about the RLC layer. Based on this information, the quality-of-service packet processor module can decide whether further data packets are forwarded to the transmission protocol stack, or whether said data packets have to be buffered, or even deleted. By means of said feedback channel, a kind of closed-loop control circuit for controlling the data flow is established. Congestion of the transmission protocol stack is avoided.

Preferably, the mobile device comprises an application manager module adapted for collecting information about the applications and their respective quality-of-service requirements. Said application manager module is responsible for collecting data from said applications. In case the set of applications is modified, the application manager module might have to be modified as well, but the other modules do not necessarily have to be changed.

Further preferably, the mobile device comprises a protocol manager module adapted for initialising said protocol optimisers in accordance with at least one of: the required transport protocols and the quality-of-service requirements of the applications. The protocol manager module is informed about the applications and their data traffic. In case the transmission of a new kind of data traffic is started, the protocol manager module might reinitialise the corresponding protocol optimisers.

The modules according to embodiments of the present invention can be partly or entirely embodied or supported by suitable software, which can be stored on or otherwise provided by any kind of data carrier, and which might be executed in or by any suitable data processing unit.

### BRIEF DESCRIPTION OF THE DRAWINGS

Other objects and many of the attendant advantages of the present invention will be readily appreciated and become better understood by reference to the following detailed description when considering in connection with the accompanied drawings.
- Fig. 1: shows the set-up of a mobile device; and
- Fig. 2: depicts the set-up of a mobile device comprising a QoS management system.

### DETAILED DESCRIPTION OF EMBODIMENTS OF THE INVENTION

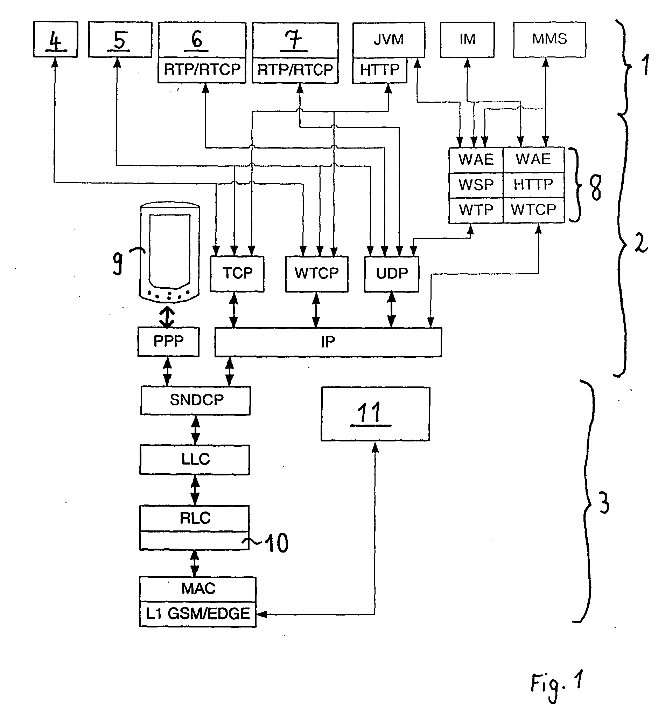

Fig. 1 gives an overview of the data flow in a mobile device. The mobile device comprises a plurality of applications 1 that exchange data packets of different transport protocols 2 with a transmission protocol stack 3. The applications 1 might comprise applications such as mail 4, games 5, Video 6, Push2talk 7, JVM (Java Virtual Machine), IM (Instant Messaging), MMS (Multimedia Messaging Service). Applications like mail 4 or JVM generate data that has to be transmitted securely. For this kind of data, transport protocols like e.g. TCP/IP (Transmission Control Protocol/Internet Protocol) and WTCP/IP (Wireless TCP) are well-suited. Other applications like e.g. Video 6 or Push2talk 7 generate real-time data streams according to the standards RTP (Real-Time Transport Protocol) and RTCP (Real-Time Transport Control Protocol). Games 5 might generate real-time data streams. Usually, the protocol UDP/IP (User Datagram Protocol/Internet Protocol) is employed for the transport of real-time data streams, because UDP/IP allows for a fast transmission ("Fire and Forget") that is not impaired by security features and error handling. For the transport of data that is provided by applications such as JVM, IM or MMS, the transport protocol WAP (Wireless Application Protocol) 8 is used. As can be seen from Fig. 1, the protocol WAP 8 represents a plurality of different protocols.

Data packets that have been generated by an application are provided to the transmission protocol stack 3, in order to transmit said data via a wireless connection. Data that has been received via the wireless link is routed to a corresponding transport protocol stack. In addition to the IP-based transport protocols, also the point-to-point protocol (PPP) might be utilized, e.g. for exchanging date with a PDA (Personal Digital Assistant) 9 that is connected to the mobile device.

The transmission protocol stack 3 might e.g. be a GPRS/GSM stack or a GPRS/EDGE stack. In the future, other transmission protocol stacks that relate to future transmission protocols might be employed.

In the lower part of Fig. 1, layers of a transmission protocol stack of the GPRS type are shown. The uppermost layer of said stack is the SNDCP (Sub-Network Dependent Convergence Protocol). The subsequent layer, the LLC (Logical Link Control) is responsible for segmenting IP-packets into data blocks that are forwarded to the RLC (Radio Link Control). The RLC comprises a RLC buffer 10 adapted for storing said data blocks until they are transmitted. For the transmission of the data packets via the wireless link, either an acknowledged mode or an unacknowledged mode may be used. The data packets are provided to the MAC (Medium Access Control) and to the physical layer L1, which is the lowest layer of the GPRS/GSM/EDGE stack. The physical layer L1 provides data to and receives data from a modulation unit. The physical layer L1 is connected with the Radio Resource Management 11. The Radio Resource Management 11 is responsible for monitoring and adjusting the available bandwidth of the wireless connection.

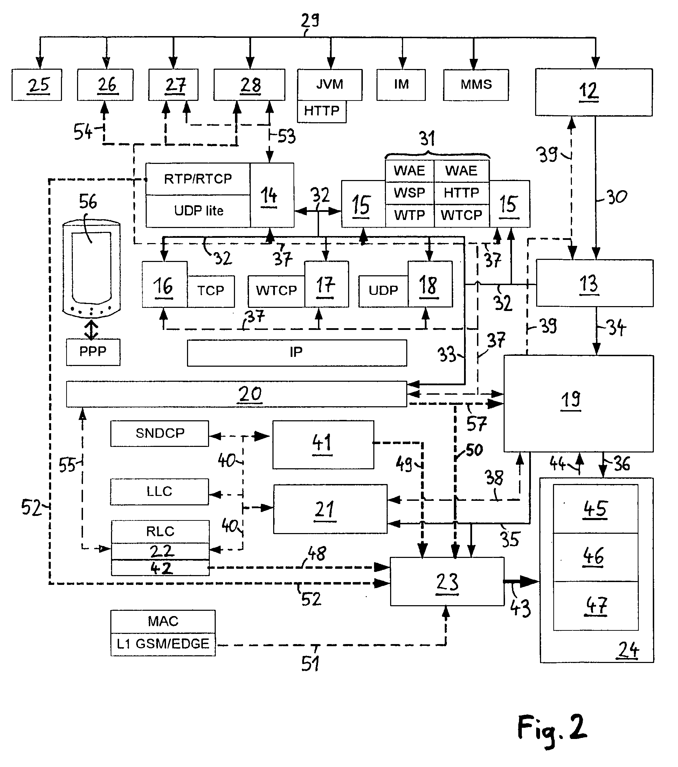

In Fig. 2, the structure of a QoS management system according to embodiments of the present invention is shown. The QoS management system is a collection of different modules and has to be seen as a basis for further architectural designs. Due to the modular approach, it can be adapted easily to different needs of various systems and/or customers. The QoS management system might e.g. fulfill the tasks of optimising the data flow within the mobile device in accordance with the QoS (Quality of Service) requirements of the applications, and in accordance with the behavior of the network and the air link, whereby dynamic methods and predictive flow control (PFC) are utilized. The QoS management system controls and coordinates the QoS related settings within the mobile device.

The QoS management system shown in Fig. 2 comprises an application manager 12, a protocol manager 13, a set of protocol optimisers 14-18, a main controller 19, a QoS packet processor 20, a stack manager 21, a RLC manager 22, a collector 23 and a state predictor 24. It has to be pointed out that a QoS management system according to an embodiment of the present invention doesn't have to comprise every single one of said modules. A QoS management system according to an embodiment of the present invention might as well comprise a subset of the above-mentioned modules. In the following, the functionality and the interplay of said modules will be described in more detail.

The application manager 12 keeps track of the various applications that are implemented on the mobile device, and of the QoS requirements of said applications. In the example of Fig. 2, the mobile device comprises the applications mail 25, games 26, Video 27, Push2talk 28, JVM, IM, and MMS. It has to be pointed out that besides the above-mentioned applications, the mobile device might comprise further applications that are not aware of the application manager 12.

During the QoS assignment 29, the application manager 12 is informed about the respective QoS requirements of the various applications. The protocol manager 13, which is initialised (30) by the application manager 12, is also informed about the applications and their QoS requirements. In case the system set-up is changed, a re-initialisation of the application manager 12 might either be induced by the applications or by the main controller 19.

QoS classes are assigned to the various applications in order to differentiate the traffic in accordance with the needs of said applications. This differentiation might be based upon the required reliability, priority, delay and the required bandwidth. In general, the respective QoS requirements are specified in terms of four basic QoS classes that have been defined by 3GPP (3^{rd} Generation Partnership Project), though other classifications might be used as well.

### Conversational class

Traffic of the conversational class is very delay sensitive, and transfer delay and time variance between packets must stay below a certain value so that the human perception will accept the quality of the link. For traffic of the conversational class, it is most important that data is delivered in time. The bit error rate (BER) of the data traffic is not that critical. Examples for traffic of the conversational class comprise IP telephony and video telephony. In the example of Fig. 2, data traffic of the application Video 27 belongs to the conversational class.

### Streaming class

Traffic of the streaming class comprises one way real-time traffic. For traffic of the streaming class, a low transfer delay is not necessarily required, but the delay variation of the real-time data stream should be limited. In Fig. 2, data traffic of the application Push2talk 28 belongs to the streaming class.

### Interactive class

Traffic of this class might for example emerge from an application where a user exchanges data interactively with an opposite party, which might either be another user or a computer system. The response to a request is generally expected within a certain time limit. Although the transfer delay may be higher than in case of traffic of the conversational class, the round trip time (RTT) is a key parameter. Traffic of the interactive class should show a low BER. Examples for this kind of traffic comprise web browsing or Telnet. In the example of Fig. 2, data traffic of the applications IM and JVM belongs to the interactive class.

### Background class

For data traffic of the background class, low delay or a short delivery time is not an issue, but the bit error rate (BER) has to be low. Data traffic of this class is usually received by a computer. Email traffic is a typical example for this kind of traffic. Accordingly, data traffic of the application mail 25 in Fig. 2 belongs to the background class.

Each one of the basic QoS classes may be further split into subclasses. For example, within the interactive class, Telnet traffic might be found in a different QoS subclass than http traffic.

The applications for the mobile device may be provided by different third-party companies. Based on the same reference platform, a lot of different mobile terminals comprising different applications might be developed. If different handsets are built that are based on one reference design, the application manager 12 will usually be the only instance that will have to be adapted. All the other modules of the QoS management system will usually not have to be modified.

The protocol manager 13 is aware of the applications and of the QoS classes that have been assigned to said applications. Besides that, the protocol manager 13 has to be aware of the available set of protocol optimisers. The protocol optimisers 14-18 shown in Fig. 2 are respectively responsible for optimising the protocols RTP/RTCP/UDP lite, for optimising the set of WAP-protocols 31, and for optimising the protocols TCP, WTCP, and UDP. The protocol manager 13 initialises (32) the protocol optimisers 14-18. During the initialisation, the parameters of a protocol optimiser are set in accordance with the QoS class of the application that utilizes the respective protocol. After the protocol optimisers have been initialised, they adapt their corresponding protocols in accordance with the QoS class assignment and/or the properties of the link layer. The parameters of the corresponding transport protocol stacks are modified in a way that the overall data flow is optimised with respect to the applications' QoS requirements.

The protocol manager 13 is also responsible for initialising (33) the QoS packet processor 20. The QoS packet processor 20 is informed about the protocols and the protocol parameters (for example the ports) the applications are using. After the protocol manager 13 has performed the initialisations, it transfers (34) the control of the protocol optimisers 14-18 to the main controller 19. The control of the QoS packet processor 20 is also transferred to the main controller 19. Besides that, the protocol manager 13 is responsible for carrying out re-initialisations of the protocol optimisers and/or of the QoS packet processor. Said re-initialisations might be induced by the application manager 12 and/or by the main controller 19.

The main controller 19 is responsible for coordinating the overall data flow within the mobile device. For this purpose, the main controller 19 acquires data from all parts of the system. First of all, the main controller 19 initialises (35, 36) the stack manager 21, the collector 23 and the state predictor 24. After said units have been initialised, the main controller 19 receives, via the collector 23, measured data from all parts of the system, e.g. from the transmission protocol stack. Besides that, the main controller 19 receives predicted data indicating the future system state from the state predictor 24. Based on this information, the main controller 19 decides how the parameters within the system, in particular the QoS parameters, have to be set, whereby the QoS requirements of the various applications are considered. The main controller 19 controls (37) the protocol optimisers 14-18 and the QoS packet processor 20. The main controller 19 also controls (38) the stack manager 21. All these functional units are provided with the current set of optimised parameters. If the main controller 19 becomes aware of an event like a cell reselection, it will inform the protocol optimisers, the QoS packet processor and the stack manager about said event. Thus, the data traffic can be adapted to the new situation. If it becomes necessary, the main controller will induce (39) a re-initialisation of the application manager 12 and/or of the protocol manager 13.

In addition to line status control, feedback control and decision making, the main controller 19 is also responsible for validating the decisions that have been taken in the past. In particular, the main controller 19 has to prevent that different protocol optimisers work against each other. In case they do, a re-initialisation of the protocol optimisers has to be initiated. Feedback channels from the protocol optimisers to the main controller 19 are used for collecting additional status information on the protocol optimisation procedures.

The Mobility/Radio Resource Management 41 is responsible for the mobility management, for authorization, and for establishing and terminating a wireless connection. The Mobility/Radio Resource Management 41 is also responsible for performing cell reselections, i.e. for switching from one base station to an adjacent base station.

The stack manager 21 is responsible for dynamically adapting (40) the GPRS GSM/EDGE stack shown in Fig. 2. There exist a variety of possibilities how the stack manager 21 can do that: It might for example influence the Mobility/Radio Resource Management 41 in a way that a cell reselection is either initiated or delayed. Furthermore, it might reset the RLC buffer 42 and/or delete selected PDUs (Packet Data Units) in the RLC buffer 42. It might as well exert a TBF (Temporary Block Flow) control by using at least one of the RLC manager 22 and the Mobility/Radio Resource Management 41. Besides that, the stack manager 21 might define and administrate different PDP contexts for different service classes. In this respect, it might make use of the predefined GPRS QoS classes by signalling to the GPRS stack that a certain QoS class shall be selected, either for one or for all the PDP contexts. Furthermore, the stack manager 21 might set the filter rules on the part of the GGSN (Gateway GPRS Serving Note) in accordance with the QoS requirements of the respective traffic. In addition, class marks and watermarks might be set in accordance with the QoS profile. Furthermore, by setting the RLC mode, the stack manager 21 might specify whether an acknowledged or an unacknowledged mode shall be used for the data transmission, and how the delivery of defective RLC blocks shall be handled.

The state predictor 24 is responsible for predicting the future behaviour of the system parameters or for predicting special events like for example cell reselections. The predictions are based on measurement or statistics from the GPRS stack or higher layer protocols that are received (43) from the collector 23. The state predictor 24 forwards (44) its predictions to the main controller 19. The state predictor 24 might comprise a multitude of different state predictor modules. For example, the state predictor 24 might comprise a state predictor module 45 adapted for predicting round trip time (RTT) and throughput. Furthermore, the state predictor 24 might comprise a state predictor module 46 adapted for predicting cell reselections. During a cell reselection, data transmission is interrupted for a period of time in the order of several seconds. For this reason, predicting cell reselections is an important task. Additionally, the state predictor 24 might comprise a state predictor module 47 adapted for predicting the coding scheme and the BER (Bit Error Rate), which is particularly relevant for GSM CS3 (Coding Scheme 3) and CS4 (Coding Scheme 4) and for EDGE. Additional state predictor modules for different networks or different network parameters may be added to the state predictor 24. In order to incorporate new strategies, the algorithms used by the state predictor modules may be updated dynamically, whereby the updating may either be controlled by the user or by a network component. The main rules for the optimisation can either be set by the user, by the operator, or by the network.

The collector 23 is responsible for collecting measured data from all parts of the system. For example, the collector 23 receives RLC buffer information 48 from the RLC layer, radio resource management information 49 from the Mobility/Radio Resource Management 41, status information 50 from the QoS packet processor 20, bit error rates 51 from the layer L1, as well as the used coding scheme, and feedback information 52 from the RTP/RTCP, UDP lite protocol stack. The collector 23 provides (43) the measured data to the state predictor 24. Besides that, the measured data is also provided to the main controller 19. If any one of the protocol stacks is modified, or if different versions of a protocol stack are used for different handsets, in most cases only the collector 23 will have to be modified.

The protocol optimisers 14-18 adapt the properties of their corresponding protocol stacks in accordance with the measured or predicted properties of the link layer, and in accordance with the desired QoS class of a corresponding application, whereby the respective settings for the protocol stacks are provided (37) by the main controller 19. Protocol optimisers may control third party protocol stacks (as e.g. the WAP stack) as well as protocol stacks developed by the applicant (as e.g. RTP/RTCP/UDP lite). For some of the applications, a direct control channel between the application and the corresponding protocol optimiser might be required. For example, the applications Video 27 and Push2talk 28 need a direct link 53 to the UDP lite protocol optimiser 14. In addition to the optimisation of transport protocols, an optimisation of built-in protocols (games) or modules (voice or video codec) might be desired for some of the applications. For this purpose, the application itself might request measurements and predictions from the application manager 12 that are delivered (54) by the main controller 19.

The RLC manager 22 is an entity provided by the applicant that is part of the QoS management system. The RLC manager 22 may set various parameters of the RLC, delete RLC blocks or reorder RLC blocks. In addition to the feedback channel from the RLC manager 22 to the stack manager 21, there exists a further feedback channel 55 from the RLC manager 22 to the QoS packet processor 20. By using this feedback channel 55, the QoS packet processor 20 may quickly access the RLC buffer status information in order to decide whether to hold back more packets or to deliver the next packets to the lower layers.

The QoS packet processor 20 provides for an additional adaptation of the data flow within the system. It is especially useful if more than one application is running at the same time (for example mail 25 and a real-time application such as Video 27) and/or if a PDA 56 or a laptop uses the handset as a modem while applications are running. It has to be avoided that the packet flow of a real-time application is slowed down by the packets of a typical background application such as mail. In this example, if the mail packets slow down throughput of the video packets, the QoS packet processor 20 will start holding back the mail packets. In addition to that, the QoS packet processor 20 is able to monitor the packet flow. Packets from applications or protocols that are not aware of the QoS management system and that are therefore not optimised can be detected dynamically by means of protocol type port and service description in the header. Then, the packet flow of the respective application can be optimised.

The QoS packet processor 20 closely cooperates with the RLC manager 22. Based on the information obtained via the feedback channel 55, the QoS packet processor 20 decides whether to hold back the next packets or to send them to the lower layers. If the available bandwidth is not sufficient to transfer all the packets and some packets have minor importance, these packets may be dropped by the QoS packet processor 20. In this case, re-initialisation may be necessary. Information about the packet flow is sent (57) from the QoS packet processor 20 to the main controller 19. The main controller 19 draws up packet flow statistics that is used for validating the actual QoS parameters. The QoS packet processor 20 might also be prepared for additional packet manipulation and optimising techniques, e.g. with respect to data compression or header compression. For example, it might fragment large data packets that are e.g. issued by third party applications.

From the modules that have been described so far, the application manager 12, the protocol manager 13 and the collector 23 comprise external interfaces that are realized by means of APIs (Application Programmer Interfaces). These well-defined interfaces simplify the adaptation of the application manager 12, the protocol manager 13 and the collector 23 to new applications, protocol stacks and layers. All the other interfaces of the QoS management system's modules are realized as internal interfaces. In fact, the application manager 12, the protocol manager 13, and the collector 23 are the only modules that have to be adapted to the respective handset and to the software running on said handset.

In the following, several examples will be discussed in order to illustrate how the QoS management system works. As a first example, a mail/message application and a real-time application like Voice over IP or Video are considered that are running at the same time. First, the mail/message application indicates to the application manager 12 that it intends to send and receive messages. The QoS class "background", which has the lowest priority, is assigned to the mail/message application, which will use the protocol WTCP. The application manager 12 informs the protocol manager 13. The protocol manager 13 initialises the WTCP protocol optimiser 17 and the QoS packet processor 20 and passes the control to the main controller 19. The main controller 19 initialises the stack manager 21, the collector 23 and the state predictor 24. The state predictor module 46 adapted for predicting cell reselections is started. The collector 23 starts to collect messages from the Mobility/Radio Resource Management 41 and sends them (43) to the state predictor module 46. The stack manager 21 sets the right GPRS parameters and RLC parameters in order to build up a GPRS connection with suitable QoS settings. The mail/message application starts to send messages. Data packets that are queued in the QoS packet processor 20 are passed to the RLC buffer 42 in a way that the RLC buffer 42 contains an optimum amount of data.

Now, the real-time application (Video or Voice over IP) is started. It indicates to the application manager 12 that the highest QoS class "conversational", non-acknowledged mode is requested. It also indicates the required bandwidth. The real-time application uses the protocols RTP/RTCP and UDP lite. The application manager 12 informs the protocol manager 13. The protocol manager 13 initialises the RTP/RTCP/UDP lite protocol optimiser 14 and reinitialises the QoS packet processor 20. Then, the control is passed to the main controller 19. The main controller 19 re-initialises the stack manager 21, the collector 23 and the state predictor 24. The state predictor module 45 adapted for predicting roundtrip time (RTT) is started. The collector 23 starts to collect (48) RLC buffer status messages and forwards them to the main controller 19. The stack manager 21 sets the right GPRS parameters and RLC parameters. The main controller 19 starts to monitor the bandwidth. Both applications start to send data. The real-time packets are given to the lower layer directly without queuing. The WTCP packets are queued in the QoS packet processor 20. If the allocated bandwidth is more than required by the real-time application, the QoS packet processor 20 will forward these packets to the lower layers. Additionally, the data packets of the background class may be intermittently transmitted between the data packets of the real-time data stream.

As a second example, a real-time video application will be discussed that comprises two RTP streams, one for the voice, and one for the pictures. The initialisation is carried out as described above. From the user's point of view, the voice data stream is more important than the video data stream. The user can rather accept some missing pictures than missing or delayed voice data. For this reason, the QoS subclass of the voice RTP stream is higher than that of the video RTP stream. If the allocated bandwidth is not sufficient for transferring both streams, the RLC manager 22 will inform the QoS packet processor 20 via the feedback channel 55. In this situation, the QoS packet processor 20 will drop as many RTP packets of the video stream as necessary to fit both streams into the allocated bandwidth. The packets of the voice RTP stream are not dropped, they are transferred as fast as possible.

As a third example, a re-initialisation of QoS settings is carried out for a real-time Voice over IP application. Again, the initialisation is done as described in connection with the first example. For the Voice over IP application, the best codec mode (highest quality, biggest data payload) is employed. The main controller 19 monitors the allocated bandwidth. If it can be seen that the allocated bandwidth is not sufficient for transferring the RTP packets in time, the main controller 19 will send a re-initialisation command to the application manager 12. The application manager 12 informs the VoIP application about the amount of allocated bandwidth. The VoIP application re-initialises and starts to use another codec mode (less quality, less data payload). The protocol manager 13 re-initialises the corresponding protocol optimisers and passes the control back to the main controller 19.

## Claims

1. A controller module (19) for coordinating data flow in a mobile device that comprises at least one application (25-28, JVM, IM, MMS) adapted for exchanging data with at least one protocol stack (2, 3); said protocol stacks (2, 3) being adapted for transferring data between at least one of said applications and a wireless connection;
**characterized in that**
- said controller module (19) is adapted for receiving information about the respective quality-of-service requirements of at least one of said applications, and at least one of actual parameters and predicted parameters within the mobile device that indicate at least one of an actual state and a future state of said data flow; and
- said controller module (19) is adapted for deriving, from said inputs, control settings for the mobile device in a way that said quality-of-service requirements are fulfilled as far as possible.

2. The controller module of claim 1, **characterized in that** said controller module (19) receives said actual parameters from at least one of: the applications, the protocol stacks (2, 3), the wireless connection.

3. The controller module of claim 1 or any one of the above claims, **characterized in that** said actual parameters comprise at least one of: workload of at least one of the protocol stacks, fill level of buffers, available bandwidth, signal strength on the wireless link.

4. The controller module of claim 1 or any one of the above claims, **characterized in that** said control settings comprise control settings for at least one of: the protocol stacks, the applications, and the wireless connection.

5. The controller module mobile device of claim 1 or any one of the above claims, **characterized in that** said protocol stacks comprise:
- at least one transport protocol stack (2) adapted for transferring data between at least one of the applications and a transmission control stack (3);
- the transmission protocol stack (3), which is adapted for transferring data between at least one of said transport protocol stacks (2) and the wireless connection.

6. The controller module mobile device of claim 1 or any one of the above claims, **characterized in that** said controller module (19) is adapted for at least one of validating whether the derived control settings have been well-suited for fulfilling said quality-of-service requirements and whether the predicted parameters have been correct.

7. A mobile device comprising
- at least one application (25-28, JVM, IM, MMS) adapted for exchanging data with at least one protocol stack (2, 3);
- at least one protocol stack (2, 3) adapted for transferring data between at least one of said applications and a wireless connection;
**characterized by**
- a controller module (19) adapted for coordinating data flow in the mobile device,
- wherein said controller module (19) is adapted for receiving information about the respective quality-of-service requirements of at least one of said applications, and at least one of actual parameters and predicted parameters within the mobile device that indicate at least one of an actual state and a future state of said data flow; and
- wherein said controller module (19) is adapted for deriving, from said inputs, control settings for the mobile device in a way that said quality-of-service requirements are fulfilled substantially in the best possible way.

8. The mobile device of claim 7 or any one of the above claims, **characterized in that** said controller module (19) receives said actual parameters from at least one of: the applications, the protocol stacks, the wireless connection.

9. The mobile device of claim 7, **characterized in that** said actual parameters comprise at least one of: workload of at least one of the protocol stacks, fill level of buffers, available bandwidth, signal strength on the wireless link.

10. The mobile device of claim 7 or any one of the above claims, **characterized in that** said control settings comprise control settings for at least one of: the protocol stacks, the applications and the wireless connection.

11. The mobile device of claim 7 or any one of the above claims, **characterized in that** said protocol stacks comprise:
- at least one transport protocol stack (2) adapted for transferring data between at least one of the applications and a transmission control stack (3);
- the transmission protocol stack (3), which is adapted for transferring data between at least one of said transport protocol stacks (2) and the wireless connection.

12. The mobile device of claim 11, **characterized in that** the transport protocols comprise at least one of the protocols WAP, TCP, WTCP, UDP, UDP lite, RTP/ RTCP.

13. The mobile device of claim 11 or any one of the above claims, **characterized in that** said transmission protocol stack (3) is a stack for at least one of: GPRS/GSM, GPRS/EDGE, CDMA, UMTS, wireless LAN, Bluetooth.

14. The mobile device of claim 11 or any one of the above claims, **characterized in that** said transmission protocol stack (3) comprises at least one of a SNDCP, LLC, RLC, MAC, L1 layer.

15. The mobile device of claim 7 or any one of the above claims, **characterized by** a collector module (23) adapted for collecting at least one of said actual parameters within the mobile device that indicate the actual state of the data flow.

16. The mobile device of claim 7 or any one of the above claims, **characterized by** a state predictor module (24) adapted for deriving, from at least one of said actual parameters, predicted parameters within the mobile device that indicate a future state of the data flow.

17. The mobile device of claim 16, **characterized in that** said state predictor module (24) provides predictions for at least one of: round trip time, throughput, coding scheme, bit error rate, cell reselections.

18. The mobile device of claim 7 or any one of the above claims, **characterized by** at least one protocol optimiser module (14-18) adapted for accessing the settings of corresponding transport protocol stacks, preferably in accordance with control settings provided by the controller module (19).

19. The mobile device of claim 7 or any one of the above claims, **characterized by** a stack manager module (21) adapted for accessing the settings of the transmission protocol stack, preferably in accordance with control settings provided by the controller module (19).

20. The mobile device of claim 19, **characterized in that** said stack manager module (21) is adapted for at least one of:
- modifying the timing of a cell reselection;
- interacting with the RLC layer of the transmission protocol stack;
- indicating to the transmission protocol stack that a certain quality-of-service class is required;
- managing PDP contexts of the transmission protocol stack in accordance with quality-of-service requirements;
- setting or modifying GGSN filter rules.

21. The mobile device of claim 7 or any one of the above claims, **characterized by** a quality-of-service packet processor module (20) adapted for at least one of monitoring and modifying the data flow between said at least one transport protocol stack and the transmission protocol stack.

22. The mobile device of claim 21, **characterized in that** said quality-of-service packet processor module (20) is adapted for buffering data packets in order to optimise the data flow.

23. The mobile device of claim 7 or any one of the above claims, **characterized by** a RLC manager module (22) adapted for accessing the RLC layer.

24. The mobile device of claim 23, **characterized in that** said RLC manager module (22) establishes a feedback channel to the quality-of-service packet processor module (20) in order to provide the quality-of-service packet processor module (20) with information about the RLC layer.

25. The mobile device of claim 7 or any one of the above claims, **characterized by** an application manager module (12) adapted for collecting information about the applications and their respective quality-of-service requirements.

26. The mobile device of claim 7 or any one of the above claims, **characterized by** a protocol manager module (13) adapted for initialising said protocol optimisers (14-18) in accordance with at least one of: the required transport protocols and the quality-of-service requirements of the applications.

27. A method for coordinating data flow in a mobile device, said mobile device comprising at least one application (25-28, JVM, IM, MMS) adapted for exchanging data with at least one protocol stack (2, 3); said protocol stacks (2, 3) being adapted for transferring data between at least one of said applications and a wireless connection; with said method comprising the following steps:
- collecting information about the respective quality-of-service requirements of at least one of said applications;
- collecting at least one of actual parameters and predicted parameters within the mobile device that indicate at least one of an actual state and a future state of said data flow;
- deriving, from the collected data, control settings for the mobile device in a way that said quality-of-service requirements are fulfilled as far as possible.

28. Computer program product, comprising computer program means adapted to embody the features of the controller module as defined in any one of claims 1 to 6 when said computer program product is executed on a mobile device, processing system, digital signal processor, or the like.

29. Computer program product, comprising computer program means adapted to perform the method steps as defined in claim 27 when said computer program product is executed on a mobile device, processing system, digital signal processor, or the like.
